# EUROPÄISCHE PATENTSCHRIFT

(11) **EP 2 153 952 B1**
(45) Veröffentlichungstag und Bekanntmachung des Hinweises auf die Patenterteilung: **09.02.2011**
(21) Anmeldenummer: 08162150.0
(22) Anmeldetag: 11.08.2008
(51) Int. Cl.: B27C 9/02, B23Q 11/12

(54) **Bearbeitungsvorrichtung**
Processing device
Dispositif d'usinage

(43) Veröffentlichungstag der Anmeldung: 17.02.2010
(73) Patentinhaber: Homag Holzbearbeitungssysteme AG, 72296 Schopfloch (DE)
(72) Erfinder: Sturm, Gotthilf, 72293 Glatten (DE); Matt, Marco, 72250 Freudenstadt (DE)
(74) Vertreter: HOFFMANN EITLE

(56) Entgegenhaltungen:
- EP-A- 0 743 139
- EP-A- 1 640 112
- DE-A1- 10 210 906
- DE-U1- 20 303 074

## Beschreibung

### Technisches Gebiet

Die Erfindung betrifft eine Bearbeitungsvorrichtung zum Bearbeiten von Werkstücken, die bevorzugt zumindest abschnittsweise aus Holz, Holzwerkstoffen, Kunststoff oder dergleichen bestehen, mit einer Spindeleinheit, nach dem Oberbegriff von Anspruch 1.

### Stand der Technik

Bearbeitungsvorrichtungen der eingangs genannten Art, die z. B. als Bearbeitungszentren ausgestaltet sein können, finden beispielsweise im Bereich der Herstellung von Möbelteilen oder Bauelementen verbreitet Anwendung. Dabei kommen unterschiedliche Bearbeitungswerkzeuge und Bearbeitungsaggregate zum Einsatz, die automatisiert in die Schnittstelle der Spindel der Bearbeitungsvorrichtung ein- bzw. ausgewechselt werden (vgl. beispielsweise EP 1 640 112). Bei den Bearbeitungsaggregaten kann es sich beispielsweise um Bohraggregate, Fräsaggregate, Kantenanleimaggregate oder vielfältige andere Aggregate handeln.

Im Bereich der Holzbearbeitung und ähnlichen Gebieten wird bei spanenden Bearbeitungen üblicherweise mit sehr hohen Drehzahlen der Spindel gearbeitet, so dass die Bearbeitungsaggregate einem hohen Verschleiß unterliegen. Dies gilt insbesondere für die Getriebe der Bearbeitungsaggregate, beispielsweise Winkelgetriebe. Um den Verschleiß zu minimieren, können die Bearbeitungsaggregate daher mit einer geeigneten Grundschmierung ausgestattet sein, was jedoch nur eine begrenzte Wirkung besitzt. Als weitere Maßnahme ist es daher bekannt, am Bearbeitungsaggregat ein Schmiersystem vorzusehen, welches das Getriebe oder andere Teile des Bearbeitungsaggregats mit Schmierstoff versorgt (vgl. beispielsweise DE 203 03 074 U) Allerdings hat sich gezeigt, dass das Schmiersystem zu einer aufwändigen und sperrigen Konstruktion der Bearbeitungsaggregate führt und einen erheblichen Wartungsaufwand zum Nachfüllen des Schmiermittels mit sich bringt.

Als weiterer Stand der Technik ist das Dokument DE 102 10 906 A1 bekannt. Darin wird eine Bearbeitungseinrichtung mit einer Spindel offenbart, wobei in der Spindel ein erster Kanal für ein Aerosol und ein zweiter Kanal für Druckluft vorgesehen sind.

### Darstellung der Erfindung

Der Erfindung liegt daher die Aufgabe zugrunde, eine Bearbeitungsvorrichtung der eingangs genannten Art bereit zu stellen, die den Einsatz von Bearbeitungsaggregaten mit einfacher Konstruktion und geringem Wartungsaufwand bei langer Lebensdauer der Bearbeitungsaggregate ermöglicht.

Diese Aufgabe wird erfindungsgemäß durch eine Bearbeitungsvorrichtung nach Anspruch 1 sowie ein Verfahren zum Bearbeiten von Werkstücken nach Anspruch 11 gelöst. Besonders bevorzugte Weiterbildungen der Erfindung sind in den abhängigen Ansprüchen angegeben.

Der Erfindung liegt der Gedanke zugrunde, die Bearbeitungsaggregate bei einer gattungsgemäßen Bearbeitungsvorrichtung möglichst weitgehend von einem aufwändigen Schmiersystem zu befreien, ohne hierdurch die Lebensdauer der Bearbeitungsaggregate zu beeinträchtigen. Zu diesem Zweck ist erfindungsgemäß vorgesehen, dass die Bearbeitungsvorrichtung eine Dosiereinrichtung aufweist, die eingerichtet ist, mindestens eine Energieversorgungsleitung mit mindestens einer von mehreren Zuleitungen in Fluidverbindung zu bringen.

Auf diese Weise kann das jeweils an der Bearbeitungseinheit eingewechselte Bearbeitungsaggregat über die mindestens eine Energieversorgungsleitung mit einem Schmiermittel versorgt werden, so dass auf ein aggregatseitiges Schmiersystem vollständig oder zumindest weitgehend verzichtet werden kann. Hierdurch vereinfachen sich Konstruktion und Wartung der Bearbeitungsaggregate drastisch, ohne deren Lebensdauer zu beeinträchtigen. Dabei ist zu berücksichtigen, dass eine Bearbeitungsvorrichtung der hier zur Rede stehenden Art meist eine Vielzahl von einwechselbaren Bearbeitungsaggregaten aufweist, so dass sich in der Summe ein enormes Einsparungspotenzial ergibt. Diese Vorteile werden erzielt, ohne dass an der Energieversorgungsleitung der Bearbeitungsvorrichtung erhebliche Änderungen erforderlich wären.

Ein weiterer Aspekt ist, dass der über die mindestens eine Energieversorgungsleitung bereitgestellte Schmiermittelstrom je nach Bearbeitungsaggregat auch für andere Zwecke verwendet werden kann, beispielsweise als Kühlschmiermittel oder Trennmittel im Bereich einer spanenden Bearbeitung.

Die Dosiereinrichtung kann im Rahmen der vorliegenden Erfindung prinzipiell an einer beliebigen Stelle entlang der mindestens einen Energieversorgungsleitung angeordnet sein, beispielsweise auch als separate Einheit, die neben den übrigen Bauteilen der Bearbeitungsvorrichtung angeordnet ist. Gemäß einer Weiterbildung der Erfindung ist jedoch vorgesehen, dass die Dosiereinrichtung an der Spindeleinheit angeordnet ist. Auf diese Weise ergibt sich ein besonders kurzer Abschnitt der Energieversorgungsleitung, der wechselweise mit unterschiedlichen Fluiden beaufschlagt werden kann. Dies erleichtert mögliche Reinigungsvorgänge und vermindert den Verlust an Fluiden, der im Zusammenhang mit einem Steuern oder Umschalten der Dosiereinrichtung zwischen mehreren Zuleitungen verursacht wird.

Die Ausgestaltung der Dosiereinrichtung ist im Rahmen der vorliegenden Erfindung nicht besonders beschränkt. und es kann sich auch um eine mehrteilige oder mehrstufige Dosiereinrichtung handeln. Ferner kann die Dosiereinrichtung beispielsweise eingerichtet sein, Fluids aus unterschiedlichen Zuleitungen in einem gewünschten Mischungsverhältnis zu mischen und dabei ggf. ein Aerosol zu erzeugen.

Gemäß einer Weiterbildung der Erfindung ist jedoch vorgesehen, dass die Dosiereinrichtung mindestens ein Umschaltventil aufweist, das an der mindestens einen Energieversorgungsleitung angeordnet ist. Hierdurch ergibt sich ein besonders einfacher und wirksamer Dosier- bzw. Umschaltvorgang, der sich problemlos mit bekannten Mitteln steuern lässt.

Gemäß einer Weiterbildung der Erfindung ist ferner vorgesehen, dass mindestens eine der Zuleitungen mit mindestens einer Aerosolquelle in Fluidverbindung steht. Diese Ausgestaltung bietet besonders technische Vorteile dahingehend, dass sich bei Förderung eines Aerosols durch die mindestens eine Energieversorgungsleitung nur geringe Fluidablagerungen an den Wandungen der Energieversorgungsleitung ergeben. Auf diese Weise verbleiben nach dem Fördern eines bestimmten Fluids in Aerosolform durch die Energieversorgungsleitung nur geringe Reste in der Energieversorgungsleitung, so dass ein möglicher Reinigungsvorgang der Energieversorgungsleitung zügig und mit geringem Aufwand ausgeführt werden kann. Dies vermindert auch eine unnötige Verschwendung von Fluid.

Dieses Konzept hat sich als besonders vorteilhaft erwiesen, wenn die mindestens eine Aerosolquelle gemäß einer Weiterbildung der Erfindung ein Schmier- und/oder Trennmittel bereitstellt. Hier ist eine Minimierung der Ablagerungen des Schmier- bzw. Trennmittels an den Wandungen der Energieversorgungsleitung durch die Nutzung der Aerosoleigenschaften besonders wirkungsvoll, da nicht nur die Reinigung vereinfacht und die Verschwendung minimiert wird, sondern sich durch überschüssige Restmengen derartiger Stoffe auch Verschmutzungsprobleme der umgebenden Bauteile ergeben können, beispielsweise wenn die Energieversorgungsleitung zu Reinigungszwecken ausgeblasen wird und die Schmier- bzw. Trennmittelreste in die Umgebung austreten.

Der Begriff des Aerosols umfasst im Rahmen der vorliegenden Erfindung Fluide, die zerstäubte Flüssigkeitströpfchen enthalten. Obgleich die Tröpfchengröße im Rahmen der vorliegenden Erfindung nicht besonders beschränkt ist, ist gemäß einer Weiterbildung der Erfindung vorgesehen, dass die mindestens eine Aerosolquelle ein Aerosol bereitstellt, dessen mittlere Tröpfchengröße höchstens 7 µm, bevorzugt höchstens 5 µm beträgt. So haben die Erfinder festgestellt, dass sich bei derartigen Aerosolen nur geringe Ablagerungen an der Wandung der mindestens einen Energieversorgungsleitung ergeben, während weiterhin die gewünschte Schmierwirkung im Bereich des jeweiligen Bearbeitungsaagregats erzielt werden kann.

In diesem Zusammenhang haben die Erfinder ferner festgestellt, dass sich besonders vorteilhafte Schmiereigenschaften im Bereich eines Bearbeitungsaggregats ergeben, wenn die mindestens eine Aerosolquelle gemäß einer Weiterbildung der Erfindung ein Aerosol bereitstellt, dessen mittlere Tröpfchengröße mindestens 1 µm, bevorzugt mindestens 3 µm, beträgt.

Gemäß einer Weiterbildung der Erfindung ist ferner vorgesehen, dass mindestens eine der Zuleitungen mit einer Druckfluidquelle, insbesondere Druckluftquelle, in Verbindung steht. Hierdurch ergibt sich zunächst der Vorteil, dass vielfältige Bearbeitungsaggregate der hier zur Rede stehenden Art eine Druckfluidversorgung bzw. Druckluftversorgung benötigen. Darüber hinaus kann die Druckluftfluidversorgung (?) bzw. Druckluftversorgung jedoch auch vorteilhaft dazu genutzt werden, die mindestens eine Energieversorgungsleitung "auszublasen" und hierdurch von etwaigen Fluidresten der vorhergehenden Bearbeitung zu befreien. Hierdurch kommt der Druckfluidversorgung eine Doppelfunktion zu, ohne dass hierfür mehrere konstruktive Elemente oder dergleichen erforderlich wären.

Die Bearbeitungsvorrichtung kann, wie bereits eingangs erwähnt, auf unterschiedlichste Art und Weise aufgebaut sein, so dass es sich beispielsweise um eine sogenannte Stationärmaschine, eine sogenannte Durchlaufmaschine oder auch Mischformen hiervon handeln kann. Als besonders vorteilhaft hat sich das erfindungsgemäße Konzept jedoch für Bearbeitungsvorrichtungen erwiesen, die gemäß einer Weiterbildung der Erfindung ferner eine balkenförmige Führungseinrichtung aufweisen, entlang der die Spindeleinheit verfahrbar ist. Derartige Bearbeitungsvorrichtungen eignen sich besonders gut für das Konzept, vielfältigste Bearbeitungsaggregate automatisch einzuwechseln und über mindestens eine Energieversorgungsleitung mit unterschiedlichen Fluiden zu versorgen.

Ferner ist gemäß einer Weiterbildung der Erfindung vorgesehen, dass die Bearbeitungsvorrichtung mindestens ein Magazin aufweist, aus dem Bearbeitungsaggregate und/oder ggf. auch Bearbeitungswerkzeuge automatisch in die Aufnahme der Spindeleinheit einwechselbar sind. Hierdurch lässt sich besonders vorteilhaft das Konzept verwirklichen, mit einer Vielzahl unterschiedlicher Bearbeitungsaggregate und ggf. auch Bearbeitungswerkzeuge zu arbeiten, so dass von den oben diskutierten Vorteilen der Erfindung besonders wirksam Gebrauch gemacht werden kann. Ferner erhält man hierdurch eine besonders vielseitige und flexible Bearbeitungsvorrichtung.

Ein besonders vorteilhaftes Verfahren zum Bearbeiten von Werkstücken unter Einsatz einer erfindungsgemäßen Bearbeitungsvorrichtung ist in Anspruch 11 definiert. Dieses zeichnet sich dadurch aus, dass eine bestimmte Energieversorgungsleitung nacheinander mit unterschiedlichen Fluids versorgt wird, um die oben unter Bezugnahme auf die Bearbeitungsvorrichtung beschriebenen Vorteile zu erzielen.

Dabei ist es besonders bevorzugt, dass die Energieversorgungsleitung mittels des zweiten Fluids gereinigt, insbesondere ausgeblasen wird. Hierdurch kann die Energieversorgungsleitung nachfolgend für jeden beliebigen Versorgungsvorgang genutzt werden, ohne von der vorherigen Nutzung der Energieversorgungsleitung für andere Zwecke beeinträchtigt zu werden.

Vor diesem Hintergrund ist gemäß einer Weiterbildung des erfindungsgemäßen Verfahrens vorgesehen, dass nach dem Zuführen des zweiten Fluids, insbesondere nach dem Reinigen, ein weiteres Bearbeitungsaggregat in die Aufnahme der Spindeleinheit eingewechselt und über die Schnittstelle angekoppelt wird, um über die Energieversorgungsleitung mit dem zweiten oder einem weiteren Fluid versorgt zu werden.

### Kurze Beschreibung der Zeichnungen

- Fig. 1: zeigt schematisch eine teilweise Perspektivansicht einer Bearbeitungsvorrichtung zwei bevorzugter Ausführungsformen der vorliegenden Erfindung;
- Fig. 2: zeigt schematisch eine teilweise freigeschnittene Seitenansicht einer Spindeleinheit als Teil der erfindungsgemäßen Bearbeitungsvorrichtung.

Ausführliche Beschreibung bevorzugter Ausführungsformen Bevorzugte Ausführungsformen der vorliegenden Erfindung werden nachfolgend ausführlich unter Bezugnahme auf die begleitenden Zeichnungen beschrieben.

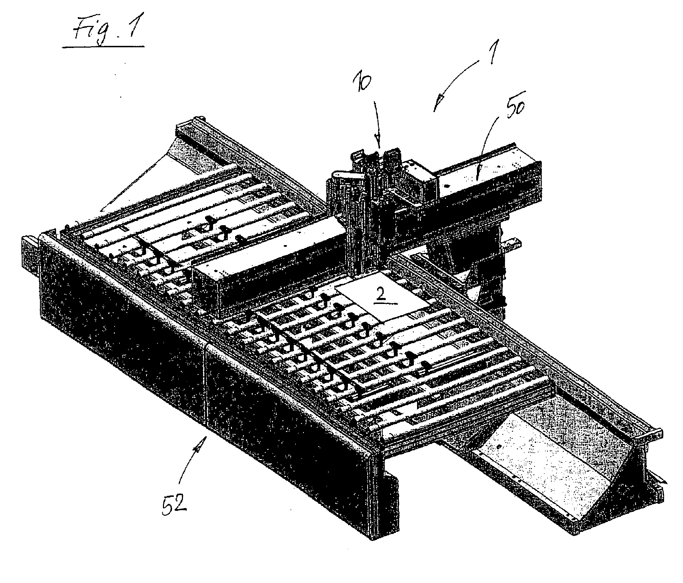

Eine Bearbeitungsvorrichtung 1 als bevorzugte Ausführungsform der Erfindung ist in Figur 1 schematisch in einer (teilweisen) Perspektivansicht dargestellt. Die Bearbeitungsvorrichtung 1 dient zum Bearbeiten von Werkstücken 2, dieser vorliegenden Ausführungsform zumindest abschnittsweise aus Holz, Holzwerkstoffen, Kunststoff oder dergleichen bestehen, wie sie im Bereich der Möbel und Bauelementeindustrie verbreitet zum Einsatz kommen. Dabei können die Werkstücke auch Abschnitte aus Metall (insbesondere Aluminium) oder ähnlichen Werkstoffen enthalten. So kann beispielsweise eine Aluminiumkante vorgesehen sein.

Die Bearbeitungsvorrichtung 1 ist in der vorliegenden Ausführungsform als Bearbeitungszentrum ausgestaltet, bei welchem Werkstücke 2 auf einem Spanntisch 52 zur Bearbeitung gespannt bzw. gehalten werden. Oberhalb des Spanntisches 52 erstreckt sich ein Ausleger 50, der mittels geeigneter Führungen und Antriebe entlang des Spanntisches 52 verfahrbar ist.

An dem Ausleger 50 ist eine Spindeleinheit 10 angeordnet, die sowohl entlang des Auslegers als auch in einer Richtung winklig zum Ausleger sowie winklig zur Ebene des Werkstücks 2 (z. B. in der so genannten z-Richtung) verfahrbar ist.

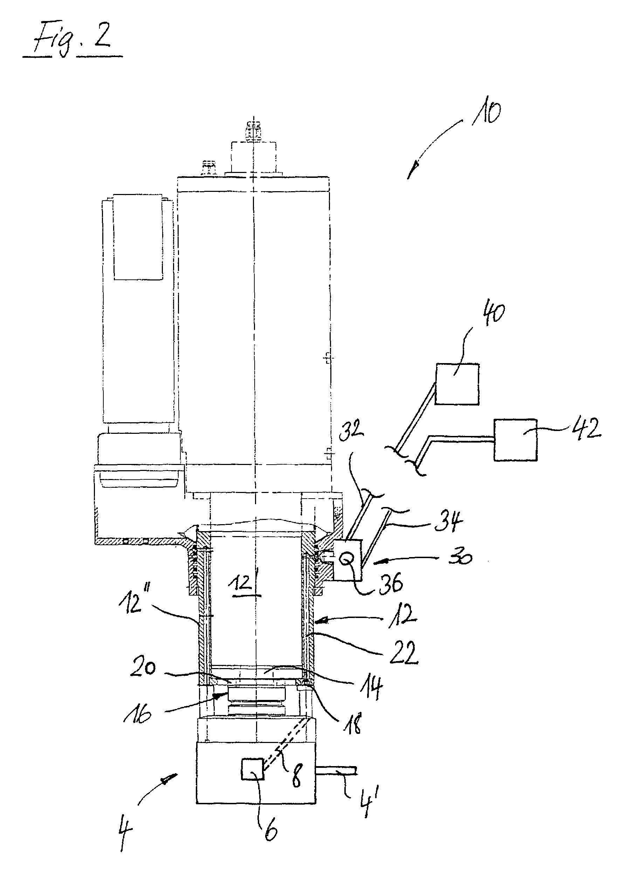

Die Ausgestaltung der Spindeleinheit 10 und ihrer Anbindung an weitere Bauteile, die in Figur 1 nicht gezeigt sind, ist in Figur 2 näher dargestellt. Danach umfasst die Spindeleinheit 10 eine in einem Gehäuse 12 drehbar gelagerte Spindel mit einer Aufnahme 14 zum automatischen Einwechseln von Bearbeitungswerkzeugen und Bearbeitungsaggregaten 4. Das Gehäuse ist in der vorliegenden Ausführungsform mehrteilig derart ausgeführt, dass die Spindel zunächst in einem Innengehäuse 12' drehbar gelagert ist, das wiederum in einer Hülse 12" gelagert ist, um eine sogenannte C-Achse zu realisieren. Die Hülse 12 " kann jedoch auch weggelassen werden oder kann durch andere Lagerungselemente wie beispielsweise einen Gabelkopf ersetzt werden, um eine 5-Achs-Maschine zu realisieren.

Im Bereich der Aufnahme 14 der Spindel ist eine universelle Schnittstelle 16 angeordnet, wie sie beispielsweise in der EP 0 743 139 näher beschrieben ist. Diese weist Energieversorgungs- und Signalübertragungseinrichtungen 18, 20 zum automatischen Ankoppeln von Bearbeitungsaggregaten 4 auf. Bei den Energieversorgungseinrichtungen kann es sich beispielsweise um Druckluftleitungen, hydraulische Leitungen oder Stromversorgungsleitungen etc. handeln. Bei den Signalübertragungseinrichtungen kann es sich beispielsweise um elektrische, optische oder sonstige Signalübertragungseinrichtungen handeln.

An der Schnittstelle 16 ist ein Bearbeitungsaggregat 4 angekoppelt, bei dem es sich in der vorliegenden Ausführungsform um ein Winkelfräsaggregat mit einem Fräswerkzeug 4' handelt, das über ein Getriebe 6 durch die Spindel der Spindeleinheit 10 angetrieben wird. Das Getriebe steht über eine Leitung 8 und die Schnittstelle 16 mit einer Energieversorgungsleitung 22 in Verbindung, auf die nachfolgend näher eingegangen wird.

Wie in Figur 2 im freigeschnittenen Bereich (bzw. der Hülse) 12 " der Spindeleinheit 10 zu erkennen ist, verläuft die Energieversorgungsleitung 22 im Bereich des Gehäuses 12 von der Schnittstelle 16 hin zu einer Dosiereinrichtung 30. Obgleich die Energieversorgungsleitung in der vorliegenden Ausführungsform in der Hülse 12 " vorgesehen ist, kann sie ebenso im Innengehäuse 12' oder einem anderen Gehäuseteil verlaufen.

Die Dosiereinrichtung 30 ist in der vorliegenden Ausführungsform als Umschalteinrichtung ausgestaltet, obgleich die Dosiereinrichtung in einer alternativen Ausführungsform auch als Mischeinrichtung zum Mischen (und ggf. auch Umschalten) mehrerer Fluids ausgestaltet sein kann. Die in Fig. 2 gezeigte Dosiereinrichtung weist ein Umschaltventil 36 auf, mittels dessen die Energieversorgungsleitung 22 wechselweise mit einer von zwei (oder mehr) Zuleitungen 32, 34 in Wirkverbindung gebracht werden kann. Bei dem Umschaltventil 36 kann es sich beispielsweise um ein pneumatisches "Oder-Ventil" handeln, das keine separate Steuerung oder Betätigung benötigt, sondern über die in den Zuleitungen 32, 34 herrschenden Drücke gesteuert und betätigt werden kann.

Dabei steht die Zuleitung 32 mit einer Aerosolquelle 40 in Fluidverbindung, die in der vorliegenden Ausführungsform ein Schmiermittel bereitstellt. Alternativ ist es ebenso möglich, dass die Aerosolquelle 40 andere Fluide wie beispielsweise auch spezielle Trennmittel (die sich gegebenenfalls auch als Schmiermittel eignen können) bereitstellt. In jedem Falle ist es dabei bevorzugt, dass die Aerosolquelle 40 ein Aerosol bereitstellt, dessen mittlere Tröpfchengröße im Bereich von 1 bis 7 µm besonders bevorzugt im Bereich von 3 bis 5 µm liegt. Auf diese Weise kann sichergestellt werden, dass das von der Aerosolquelle 40 in Aerosolform zugeführte Schmiermittel nicht in der Zuleitung 32, der Umschalteinrichtung 30 oder der Energieversorgungsleitung 22 kondensiert und dort abgelagert wird, sondern erst im Bereich des Getriebes 6 des Bearbeitungsaggregats 4 seine volle Schmierwirkung entfaltet.

Die Zuleitung 34 steht mit einer Druckfluidquelle in Verbindung, bei der es sich in der vorliegenden Ausführungsform um eine Druckluftquelle handeln kann.

Der Betrieb der erfindungsgemäßen Bearbeitungsvorrichtung 1 vollzieht sich beispielsweise wie folgt. Zunächst wird ein Bearbeitungsaggregat 4 aus einem in den Figuren nicht gezeigten Magazin entnommen, automatisch in die Aufnahme 12 der Spindeleinheit 10 eingewechselt und an die Schnittstelle 16 der Spindeleinheit 10 angekoppelt. Für diesen Vorgang kann die Spindeleinheit 10 beispielsweise zu dem nicht gezeigten Magazin verfahren werden, um das Bearbeitungsaggregat 4 aufzunehmen. Auch andere, automatische Einwechselvorgänge sind möglich.

Anschließend wird das Bearbeitungsaggregat 4 über die Energieversorgungsleitung 22 mit einem Schmiermittel in Aerosolform versorgt, dass von der Aerosolquelle 40 über die erste Zuleitung 32 bereitgestellt wird. Nun kann das Bearbeitungsaggregat 4 eine Bearbeitung an den jeweiligen Werkstücken 2 ausführen, wobei dank der zuverlässigen Schmierung hohe Drehzahlen bei geringem Verschleiß und geringem Wartungsaufwand möglich sind.

Anschließend wird das Bearbeitungsaggregat 4 von der Spindeleinheit 10 getrennt und wieder in dem nicht gezeigten Magazin abgelegt. In diesem Zustand wird das Umschaltventil 36 der Dosiereinrichtung 30 umgeschaltet, so dass die Energieversorgungsleitung 22 mit der zweiten Zuleitung 34 bzw. der Druckluftquelle 42 in Verbindung steht. Nunmehr wird Druckluft von der Druckluftquelle 42 derart zugeführt, um die Energieversorgungsleitung mittels Ausblasens zu reinigen.

Anschließend wird ein weiteres Bearbeitungsaggregat (nicht gezeigt) in die Aufnahme 12 der Spindeleinheit eingewechselt und über die Schnittstelle 16 angekoppelt. Dieses weitere Bearbeitungsaggregat kann nun problemlos beispielsweise mit Druckluft aus der Druckluftquelle 42 über die Energieversorgungsleitung 22 versorgt werden, ohne dass dies zu Verschmutzungen des weiteren Bearbeitungsaggregats mit Schmiermittel oder dergleichen führen würde. Ebenso kann das weitere Bearbeitungsaggregat auch mit einem völlig anderen Fluid über die Energieversorgungsleitung 22 versorgt werden, obgleich in der vorliegenden Ausführungsform nur zwei Fluidquellen 40, 42 gezeigt sind.

Dabei ist es insbesondere auch möglich, wie bereits erwähnt, ein (Kühl-)Schmiermittel zu dem weiteren Bearbeitungsaggregat zuzuführen, beispielsweise um das Bearbeitungswerkzeug des Bearbeitungsaggregats im Zuge der Bearbeitung zu schmieren und zu kühlen. Dies bietet sich insbesondere bei der Bearbeitung von Aluminiumkanten oder anderen metallischen Abschnitten der Werkstücke an. Auch in diesem Falle ermöglicht die erfindungsgemäße Ausgestaltung der Spindeleinheit 10, dass nach Abschluss des Zuführens des Schmiermittels eine einfache und zügige Reinigung der Energieversorgungsleitung 22 durchgeführt werden kann, um anschließend die Energieversorgungsleitung für andere Fluide zu nutzen.

## Patentansprüche

1. Bearbeitungsvorrichtung (1) zum Bearbeiten von Werkstücken (2), die bevorzugt zumindest abschnittsweise aus Holz, Holzwerkstoffen, Kunststoff oder dergleichen bestehen, mit einer Spindeleinheit (10), die aufweist
eine in einem Gehäuse (12) drehbar gelagerte Spindel mit einer Aufnahme (14) zum automatischen Einwechseln von Bearbeitungswerkzeugen und Bearbeitungsaggregaten (4); und
eine an dem Gehäuse (12) im Bereich der Aufnahme (14) angeordnete Schnittstelle (16) mit Energieversorgungs- und/oder Signalübertragungseinrichtungen (18, 20) zum automatischen Ankoppeln von Bearbeitungsaggregaten (4), wobei
die Bearbeitungsvorrichtung (1) zumindest eine Energieversorgungsleitung (22) aufweist, die sich zumindest abschnittsweise in dem Gehäuse (12) der Spindeleinheit (10) zu der Schnittstelle (16) erstreckt,
**dadurch gekennzeichnet, dass**
die Bearbeitungsvorrichtung (1) eine Dosiereinrichtung (30) aufweist, die eingerichtet ist, mindestens eine Energieversorgungsleitung (22) mit mindestens einer von mehreren Zuleitungen (32, 34) in Fluidverbindung zu bringen.

2. Bearbeitungsvorrichtung nach Anspruch 1, **dadurch gekennzeichnet, dass** die Dosiereinrichtung (30) an der Spindeleinheit (10) angeordnet ist.

3. Bearbeitungsvorrichtung nach Anspruch 1 oder 2, **dadurch gekennzeichnet, dass** die Dosiereinrichtung (30) mindestens ein Umschaltventil (36) aufweist, das an der mindestens einen Energieversorgungsleitung (22) angeordnet ist.

4. Bearbeitungsvorrichtung nach einem der vorhergehenden Ansprüche, **dadurch gekennzeichnet, dass** mindestens eine der Zuleitungen (32) mit mindestens einer Aerosolquelle (40) in Fluidverbindung steht.

5. Bearbeitungsvorrichtung nach Anspruch 4, **dadurch gekennzeichnet, dass** die mindestens eine Aerosolquelle (40) ein Schmier- und/oder Trennmittel bereitstellt.

6. Bearbeitungsvorrichtung nach Anspruch 4 oder 5, **dadurch gekennzeichnet, dass** die mindestens eine Aerosolquelle (40) ein Aerosol bereitstellt, dessen mittlere Tröpfchengröße höchstens 7 µm, bevorzugt höchstens 5 µm beträgt.

7. Bearbeitungsvorrichtung nach einem der Ansprüche 4 bis 6, **dadurch gekennzeichnet, dass** die mindestens eine Aerosolquelle (40) ein Aerosol bereitstellt, dessen mittlere Tröpfchengröße mindestens 1 µm, bevorzugt mindestens 3 µm beträgt.

8. Bearbeitungsvorrichtung nach einem der vorhergehenden Ansprüche, **dadurch gekennzeichnet, dass** mindestens eine der Zuleitungen (34) mit einer Druckfluidquelle (42), insbesondere Druckluftquelle in Verbindung steht.

9. Bearbeitungsvorrichtung nach einem der vorhergehenden Ansprüche, **dadurch gekennzeichnet, dass** sie ferner eine balkenförmige Führungseinrichtung (50) aufweist, entlang der die Spindeleinheit (10) verfahrbar ist.

10. Bearbeitungsvorrichtung nach einem der vorhergehenden Ansprüche, **dadurch gekennzeichnet, dass** sie ferner mindestens ein Magazin aufweist, aus dem Bearbeitungsaggregate (4) und/oder Bearbeitungswerkzeuge automatisch in die Aufnahme (12) der Spindeleinheit (10) einwechselbar sind.

11. Verfahren zum Bearbeiten von Werkstücken (2), die bevorzugt zumindest abschnittsweise aus Holz, Holzwerkstoffen, Kunststoff oder dergleichen bestehen, unter Einsatz einer Bearbeitungsvorrichtung (1) nach einem der vorhergehenden Ansprüche, mit den Schritten:
Einwechseln eines Bearbeitungsaggregats (4) in die Aufnahme (12) der Spindeleinheit (10) und Ankoppeln des Bearbeitungsaggregats (4) über die Schnittstelle (16),
Versorgen des Bearbeitungsaggregats (4) über mindestens eine Energieversorgungsleitung (22) mit mindestens einem ersten Fluid, das von einer ersten Zuleitung (32) bereitgestellt wird, und
Steuern der Dosiereinrichtung (30) derart, dass die Energieversorgungsleitung (22) mit einer zweiten Zuleitung (34) in Fluidverbindung steht, um ein zweites Fluid zuzuführen.

12. Verfahren nach Anspruch 11, **dadurch gekennzeichnet, dass** die Energieversorgungsleitung (22) mittels des zweiten Fluids gereinigt, insbesondere ausgeblasen wird.

13. Verfahren nach Anspruch 11 oder 12, **dadurch gekennzeichnet, dass** nach dem Zuführen des zweiten Fluids, insbesondere nach dem Reinigen, ein weiteres Bearbeitungsaggregat in die Aufnahme (12) der Spindeleinheit (10) eingewechselt und über die Schnittstelle (16) angekoppelt wird, um über die Energieversorgungsleitung (22) mit dem zweiten oder einem weiteren Fluid versorgt zu werden.

## Claims

1. Processing apparatus (1) for processing workpieces (2) which are preferably in at least one section made of timber, derived timber products, plastic or the like, having a spindle unit (10) which has
a spindle rotatably mounted in a housing (12) and having a receptacle (14) for automatically exchanging processing tools and processing units (4); and
an interface (16) arranged on the housing (12) in the region of the receptacle (14) and having energy supply and/or signal transmission devices (18, 20) for the automatic coupling of processing units (4), wherein
the processing apparatus (1) has at least one energy supply line (22) which in at least one section extends in the housing (12) of the spindle unit (10) to the interface (16),
**characterised in that**
the processing apparatus (1) has a metering device (30) which is designed to put at least one energy supply line (22) in fluid communication with at least one of several feed lines (32, 34).

2. Processing apparatus according to claim 1, **characterised in that** the metering device (30) is arranged on the spindle unit (10).

3. Processing apparatus according to claim 1 or 2, **characterised in that** the metering device (30) has at least one switching valve (36) which is arranged on the at least one energy supply line (22).

4. Processing apparatus according to any of the preceding claims, **characterised in that** at least one of the feed lines (32) is in fluid communication with at least one aerosol source (40).

5. Processing apparatus according to claim 4, **characterised in that** the at least one aerosol source (40) provides a lubricant and/or release agent.

6. Processing apparatus according to claim 4 or 5, **characterised in that** the at least one aerosol source (40) provides an aerosol of which the mean droplet size is not more than 7 µm, preferably not more than 5 µm.

7. Processing apparatus according to any of claims 4 to 6, **characterised in that** the at least one aerosol source (40) provides an aerosol of which the mean droplet size is at least 1 µm, preferably at least 3 µm.

8. Processing apparatus according to any of the preceding claims, **characterised in that** at least one of the feed lines (34) is in communication with a compressed fluid source (42), in particular compressed air source.

9. Processing apparatus according to any of the preceding claims, **characterised in that** it further has a beam-like guide device (50) along which the spindle unit (10) is movable.

10. Processing apparatus according to any of the preceding claims, **characterised in that** it further has at least one magazine from which processing units (4) and/or processing tools can be automatically given in exchange to the receptacle (12) of the spindle unit (10).

11. Method for processing workpieces (2) which are preferably in at least one section made of timber, derived timber products, plastic or the like, using a processing apparatus (1) according to any of the preceding claims, having the steps of:
giving a processing unit (4) in exchange to the receptacle (12) of the spindle unit (10) and coupling the processing unit (4) via the interface (16),
supplying the processing unit (4) via at least one energy supply line (22) with at least one first fluid which is provided by a first feed line (32), and
controlling the metering device (30) in such a way that the energy supply line (22) is in fluid communication with a second feed line (34) in order to deliver a second fluid.

12. Method according to claim 11, **characterised in that** the energy supply line (22) is cleaned, in particular blown out, by means of the second fluid.

13. Method according to claim 11 or 12, **characterised in that**, after delivery of the second fluid, in particular after cleaning, a further processing unit is given in exchange to the receptacle (12) of the spindle unit (10) and coupled via the interface (16) in order to be supplied via the energy supply line (22) with the second or a further fluid.

## Revendications

1. Dispositif d'usinage (1), pour l'usinage de pièces d'oeuvre (2), composées de préférence, au moins par tronçons, de bois, matériaux ligneux, matière synthétique ou analogue, avec une unité à broche (10), présentant :
une broche, montée à rotation dans un boîtier (12), avec un logement (14) pour l'insertion en remplacement automatique d'outils d'usinage et d'agrégats d'usinage (4) ;
une interface (16), disposée sur le boîtier (12), dans la zone du logement (14), munie de dispositifs d'alimentation en énergie et/ou de transmission de signaux (18, 20), pour accouplement automatique d'agrégats d'usinage (4), où
le dispositif d'usinage (1) présente au moins une conduite d'alimentation en énergie (22), s'étendant, au moins par tronçons, dans le boîtier (12) de l'unité à broche (10) vers l'interface (16),
**caractérisé en ce que**
le dispositif d'usinage (1) présente un dispositif de dosage (30), agencé pour mettre en liaison fluidique au moins une conduite d'alimentation en énergie (22) avec au moins l'une de plusieurs conduites d'alimentation (32, 34).

2. Dispositif d'usinage selon la revendication 1, **caractérisé en ce que** le dispositif de dosage (30) est disposé sur l'unité à broche (10).

3. Dispositif d'usinage selon la revendication 1 ou 2, **caractérisé en ce que** le dispositif de dosage (30) présente au moins une soupape de commutation (36), disposée sur la au moins une conduite d'alimentation en énergie (22).

4. Dispositif d'usinage selon l'une des revendications précédentes, **caractérisé en ce qu'**au moins l'une des conduites d'alimentation (32) est en liaison fluidique avec au moins une source d'aérosol (40).

5. Dispositif d'usinage selon la revendication 4, **caractérisé en ce que** la au moins une source d'aérosol (40) fournit un produit de lubrification et/ou de séparation.

6. Dispositif d'usinage selon la revendication 4 ou 5, **caractérisé en ce que** la au moins une source d'aérosol (40) fournit un aérosol, dont la taille moyenne de gouttelette est au moins de 7 µm, de préférence d'au moins 5 µm.

7. Dispositif d'usinage selon l'une quelconque des revendications 4 à 6, **caractérisé en ce que** la au moins une source d'aérosol (40) fournit un aérosol, dont la taille moyenne de gouttelette est au moins de 1 µm, de préférence d'au moins 3 µm.

8. Dispositif d'usinage selon l'une des revendications précédentes, **caractérisé en ce qu'**au moins l'une des conduites d'alimentation (34) est en liaison avec une source de fluide sous pression (42), en particulier une source d'air comprimé.

9. Dispositif d'usinage selon l'une des revendications précédentes, **caractérisé en ce qu'**il présente en outre un dispositif de guidage (50) en forme de poutre, le long duquel l'unité à broche (10) est déplaçable.

10. Dispositif d'usinage selon l'une des revendications précédentes, **caractérisé en ce qu'**il présente en outre un magasin, à partir duquel des agrégats d'usinage (4) et/ou des outils d'usinage sont susceptible d'être introduits en remplacement dans le logement (12) de l'unité à broche (10).

11. Procédé d'usinage de pièces d'oeuvre (2), composées de préférence, au moins par tronçons, de bois, matériaux ligneux, matière synthétique ou analogue, avec utilisation d'un dispositif d'usinage (1) selon l'une des revendications précédentes, comprenant les étapes consistant à :
introduire en remplacement un agrégat d'usinage (4) dans le logement (12) de l'unité à broche (10) et accoupler l'agrégat d'usinage (4) par l'intermédiaire de l'interface (16),
alimenter l'agrégat d'usinage (4), par l'intermédiaire d'au moins une conduite d'alimentation en énergie (22), avec au moins un premier fluide, fourni par une première conduite d'alimentation (32), et
commander le dispositif de dosage (30), de manière que la conduite d'alimentation en énergie (22) soit en relation fluidique avec une deuxième conduite d'alimentation (34), pour amener un deuxième fluide.

12. Procédé selon la revendication 11, **caractérisé en ce que** la conduite d'alimentation en énergie (22) est nettoyée, en particulier par soufflage, au moyen du deuxième fluide.

13. Procédé selon la revendication 11 ou 12, **caractérisé en ce que**, après l'amenée du deuxième fluide, en particulier après le nettoyage, un autre agrégat d'usinage est introduit en remplacement dans le logement (12) de l'unité à broche (10) et accouplé, par l'intermédiaire de l'interface (16), pour être alimenté avec le deuxième fluide ou un autre fluide, par l'intermédiaire de la conduite d'alimentation en énergie (22).
